# EUROPEAN PATENT APPLICATION

(11) **EP 1 976 187 A2**
(43) Date of publication of application: **01.10.2008**
(21) Application number: 08153261.6
(22) Date of filing: 26.03.2008
(51) Int. Cl.: H04L 12/24, H04L 12/26

(54) **System and method for real-time Iub and Iur link detection and AAL5 channel detection in UTRAN**

(30) Priority: 05.03.2008 US 43121; 30.03.2007 US 909267 P
(71) Applicant: TEKTRONIX, INC., Beaverton, OR 97077-0001 (US)
(72) Inventor: Chinnapareddy, Srikanth, Dallas, TX 75243 (US); Davulura, Sirish, Redmond, WA 98052 (US); Ratakonda, Balaji, Richardson, TX 75801 (US)
(74) Representative: Want, Clifford James

(57) **Abstract**

System and method for identifying interfaces and channels in a network using messages passing through the network. An embodiment comprises detecting components of a network, comprises capturing a message from the network, extracting a network node identifier from the captured message, comparing the network node identifier to a database of known network nodes, and, if the network node identifier is not associated with a known network node, then adding an entry for a new network node to the database, wherein the new network node entry includes the network node identifier.

## Description

### TECHNICAL FIELD

The present invention relates generally to a system and method for detecting communication links in a network and, more particularly, to a system and method for detecting Iur and Iub interfaces and AAL5 channels in a UTRAN.

### BACKGROUND

The Universal Mobile Telecommunications System (UMTS) is a third-generation (3G) mobile phone technology standardized first by the European Telecommunications Standards Institute (ETSI) and now by the 3rd Generation Partnership Project (3GPP). UMTS carries both circuit switched (CS) and packet switched (PS) traffic using Wideband Code Division Multiple Access (W-CDMA) as its air interface. The description of the network components and protocols used in UMTS are well known to those of ordinary skill in the art and are available to the public from 3GPP, ETSI, and other sources. The UMTS network architecture consists of three domains: Core Network (CN), UMTS Terrestrial Radio Access Network (UTRAN), and User Equipment (UE).

The UTRAN provides the air interface access to subscribers' UE. Base stations in the UTRAN are referred as Node-Bs, and the control equipment for the Node-Bs is called a Radio Network Controller (RNC). The UMTS User Equipment communicates via the WCDMA air interface to the Node-Bs. The UE may be attached to either the PS domain or CS domain or both. The UE is capable of simultaneously using PS services and CS services.

The Asynchronous Transfer Mode (ATM) is used for data transmission in UMTS. The ATM layer multiplexes and demultiplexes and routes ATM cells, and ensures their sequence from end to end. The ATM Adaptation Layers (AAL) are responsible for the creation and reception of payloads through the lower layers of ATM on behalf of different applications. ATM Adaptation Layer type 2 (AAL2) is used in the transmission of short and variable length packets in time-delay sensitive applications. AAL2 is used to transport multiple data streams and is used for both signalling and user payload packets. The Connection identifier (CID) is used to identify the different streams. ATM Adaptation Layer type 5 (AAL5) supports frames and is used for transmission of control information, namely signaling information.

UMTS defines several interfaces, channels and protocols for exchanging data between network components to set up calls to the UE. Each call comprises numerous messages that pass across various interfaces. In order to fully analyze a call, all of the messages for the call must be collected and correlated. One disadvantage of the prior art is that there can be numerous nodes in a UMTS network and that each of these network nodes must be known in order to accurately monitor the network. Each node will have one or more interfaces linking it to other nodes in the network.

A second disadvantage of the prior art is that the network nodes are continually changing as components, such as Node Bs, are added, moved, upgraded, serviced or deleted. Accordingly, the service provider must manually update a network configuration map each time such a change takes place.

### SUMMARY OF THE INVENTION

These and other problems are generally solved or circumvented, and technical advantages are generally achieved, by embodiments of the present invention in which RNC identifiers are extracted from messages in the UTRAN to identify interfaces between RNC components. Node B identifiers are also extracted to identify new Node Bs and associated interfaces. The virtual channel identifiers are extracted to identify new channels in the UTRAN.

In accordance with embodiments of the present invention, a method for detecting components of a network, comprises capturing a message from the network, extracting a network node identifier from the captured message, comparing the network node identifier to a database of known network nodes, and, if the network node identifier is not associated with a known network node, then adding an entry for a new network node to the database, wherein the new network node entry includes the network node identifier. The method may further comprise identifying a recipient node for the captured message, wherein the recipient node is a known network node, and adding a new network interface entry to the database, wherein the new network interface entry corresponds to a new network interface connecting the recipient node at a first endpoint and the new network node at a second endpoint. The new network node, the recipient node, and the new network interface to a user.

In one embodiment, the new network node is a Radio Network Controller (RNC) in a UTRAN network; and the network node identifier is an RNC identifier. In another embodiment, the recipient node and the new network node are both Radio Network Controllers (RNCs), and the new network interface is an Iur interface in a UTRAN network. The new network node may be a Node B in a UTRAN network, and the network node identifier may be a Node B identifier. The recipient node may be a Radio Network Controller (RNC), the new network node a Node B, and the new network interface an lub interface in a UTRAN network. The captured message may be a radio link setup message, and the network node identifier may be a transport layer address parameter.

In accordance with another embodiment of the present invention, a method for identifying channels in a network comprises capturing a message from the network, extracting channel identifiers from the captured message, creating a channel key from the channel identifiers, comparing the channel key to a database of known channels, and if the channel key is not associated with a known channel, then adding an entry for a new channel to the database. The channel identifiers may be selected from the group consisting of a Virtual Path Identifier (VPI), a Virtual Channel Identifier (VCI), and an ATM Port. The new channel can be associated to an interface. The interface can be identified using a pointcode in the captured message.

In one embodiment, the interface is an Iur interface in a UTRAN network, the captured message is a Radio Network Subsystem Application Part (RNSAP) message, and the pointcode is associated with a Radio Network Controller (RNC). The interface may be identified by determining if messages having the channel key are captured from a known interface a predetermined number of times. In another embodiment, the interface is an lub interface in a UTRAN network, and the captured message is a Node B Application Part (NBAP) or Access Link Control Application Part (ALCAP) message.

### BRIEF DESCRIPTION OF THE DRAWINGS

For a more complete understanding of the present invention, and the advantages thereof, reference is now made to the following descriptions taken in conjunction with the accompanying drawing, in which:

Figure 1 illustrates monitoring equipment coupled to a UTRAN network according to embodiments of the invention;

Figure 2 is a protocol stack for an lub interface;

Figure 3 is a protocol stack for an Iur interface;

Figure 4 illustrates capturing messages passing across network interfaces according to one embodiment of the invention;

Figure 5 illustrates capturing messages passing across network interfaces according to another embodiment of the invention;

Figure 6 illustrates capturing messages passing across network interfaces according to another embodiment of the invention; and

Figure 7 illustrates a flowchart for identifying channels in the network according to one embodiment of the invention.

### DETAILED DESCRIPTION

The present invention provides many applicable inventive concepts that can be embodied in a wide variety of specific contexts. The specific embodiments discussed are merely illustrative of specific ways to make and use the invention, and do not limit the scope of the invention.

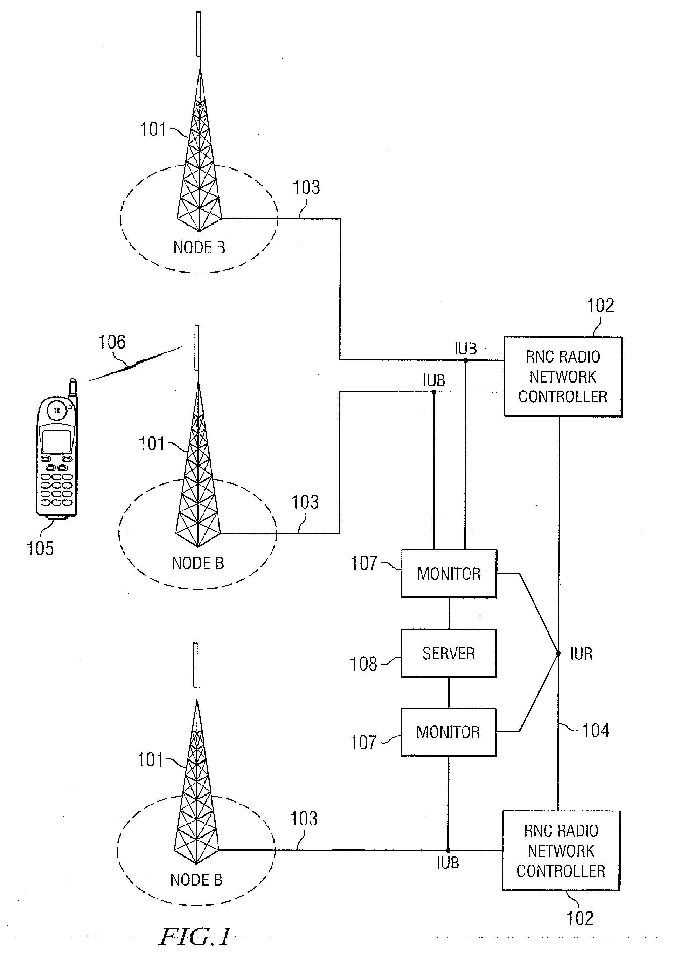

Figure 1 illustrates a UTRAN portion of a UMTS network comprising Node Bs 101 and Radio Network Controllers (RNCs) 102. Node Bs 101 communicate with RNCs 102 via Iub interfaces 103. RNCs 102 communicate with each other via lur interface 104. Node B 101 is in communication with User Equipment (UE) 105 via air interface Uu 106. Whenever UEs 105 make or receive a call, signaling messages are exchanged between Node Bs 101 and RNCs 102 over Iub interfaces 103 and between RNCs 102 over Iur interfaces 104. Monitors or probes 107 are non-intrusively coupled to RNCs 102 to capture substantially all of the protocol messages traveling to and from RNCs 102 over the Iub and Iur interfaces 103 and 104. Monitors 107 are coupled to central server 108 which allows an operator to access network information collected by monitors 107.

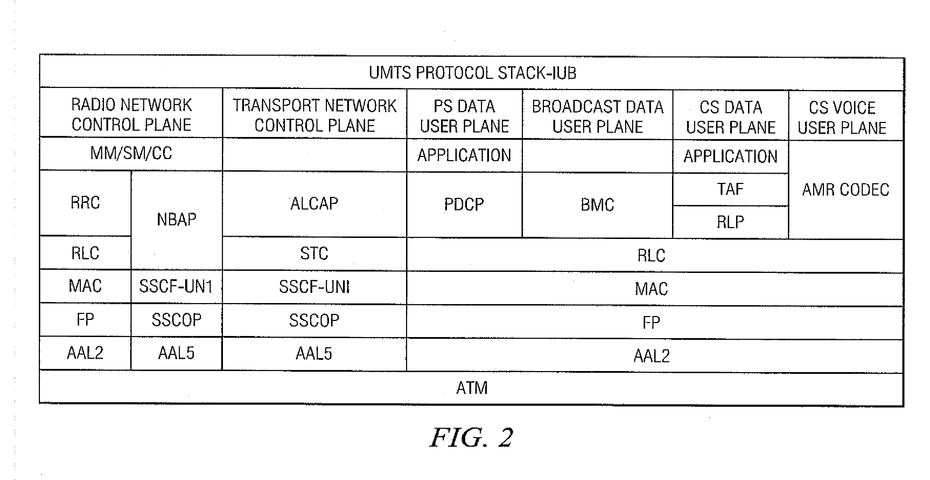

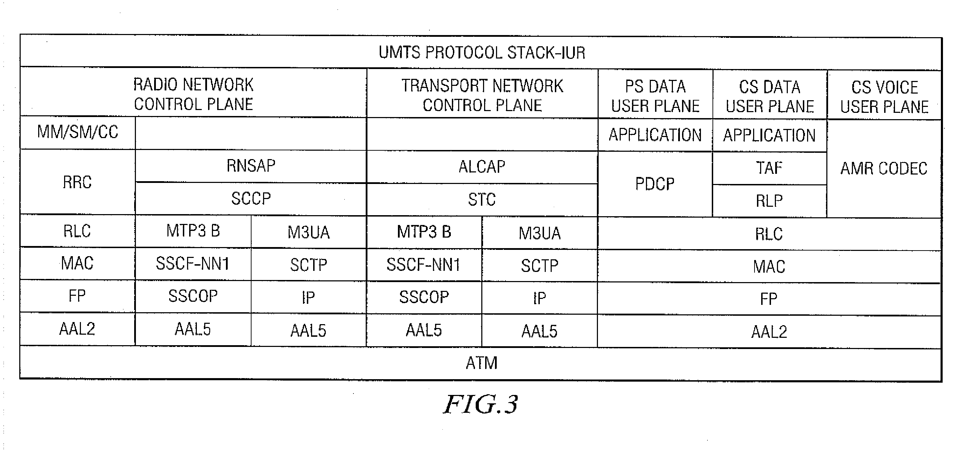

Figure 2 illustrates the protocol stack used on the Iub interface in a UTRAN network. Figure 3 illustrates the protocol stack used on the lur interface in a UTRAN network. UTRAN implements an ATM infrastructure for the Iub and Iur interfaces. UTRAN uses both AAL2 and AAL5 adaptations on top of the ATM layer. Node B Application Part (NBAP), Access Link Control Application Part (ALCAP) and Radio Network Subsystem Application Part (RNSAP) protocol messages are carried over AAL5 channels.

An ATM cell is the smallest unit in ATM and contains two address parameters, Virtual Path Identifier (VPI) and Virtual Channel Identifier (VCI). A virtual path is the permanent virtual connection for exchanging NBAP and ALCAP messages between an RNC and a Node B. The virtual path connection is setup once and remains until changed or deleted by a service provider operations and maintenance (O&M) action. To transmit higher-level protocols via ATM, the adaptation layers, such as AAL5, are used. Each AAL5 virtual connection is uniquely identified by:
ATM Virtual Path Identifier (VPI);
ATM Virtual Channel Identifier (VCI); and
ATM Port (the port on which the message arrives).

The UTRAN may comprise numerous RNCs that are linked to each other. Each RNC may be connected to as many as two hundred Node Bs. AAL5 connections can exist on all of the interfaces between the RNCs and between the RNCs and Node Bs. Accordingly, it is a very complex task to identify all the AAL5 channels that are in use in a UTRAN. The present invention dynamically detects Iub and Iur interfaces and further detects all of the AAL5 channels that are being used to transmit data in the UTRAN network.

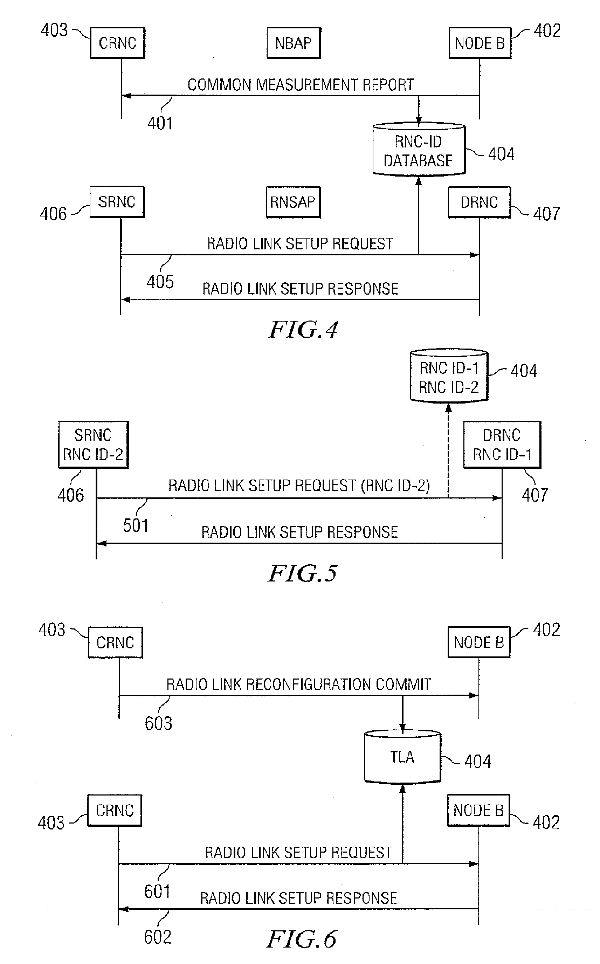

The detection of the Iur interfaces, according to embodiments of the invention, is a two-step process. To dynamically detect an lur link between two RNCs, first the identifiers for the RNCs (RNC Ids) are detected, and then the RNC Ids are used to draw a link between the two RNCs. This link corresponds to an Iur interface. RNC Ids can be identified in specific NBAP and RNSAP messages. Referring to Figure 4, Common Measurement Report message 401, a NBAP protocol message, is used by Node B 402 to report the results of measurements requested by corresponding Controlling RNC (CRNC) 403. Common Measurement Report message 401 contains an RNC Id corresponding to CRNC 403. The RNC Id is saved to database 404, which may be located at monitor 107 and/or monitoring system server 108 (Figure 1), for example.

UMTS allows macrodiversity or soft-handover in which data is sent via multiple Node Bs to a UE. Signals are transferred via multiple routes over the air interface and combined in the UE, thus limiting fading effects and requiring lower power levels. However, the Node Bs may belong to different RNCs 406 and 407. RNCs 406 and 407 can be in two logical roles. For example, RNC 407 may be logically a Drift RNC (DRNC) and RNC 406 may be logically a Serving RNC (SRNC). An lur interface connects RNCs 406 and 407. SRNC 406 controls information transfer to the UE and requests radio resources from DRNC 407. DRNC 407 only relays information between the UE and SRNC 406.

The RNSAP protocol on the lur interface includes the Radio Link Setup procedure that is used for establishing resources in DRNS 407 for macrodiversity. Radio Link Setup Request message 405 contains an RNC Id that may be captured and sent to database 404 by the UTRAN monitoring equipment. This allows the monitoring equipment to compile a list of the RNC Ids for each RNC in the UTRAN network. For example, as shown in Figure 5, database 404 has already been updated and is aware that the UTRAN includes DRNC 407 (assigned RNC Id-1) and SRNC 406 (assigned RNC Id-2). When DRNC 407 receives Radio Link Setup Request message 501 with an RNC Id that is not its own, such as RNC Id-2, message 501 is forwarded to the monitoring system to let server 108 (Figure 1) know that an lur link exists between DRNC 407 and SRNC 406. If server 108 is not yet aware of this lur interface, it sets up a new lur link between DRNC 407 and SRNC 406. The lur interfaces may be identified dynamically at run-time. The lur interfaces and RNCs may be displayed to a user, for example, on a workstation using a Graphical User Interface (GUI).

The Transport Layer Address (TLA) parameter is carried by radio link setup messages, such as Radio Link Setup Request 601, Radio Link Setup Response 602, and Radio Link Reconfiguration Commit 603 as shown in Figure 6. TLA uniquely identifies each Node B in the UTRAN. Whenever a unique TLA is discovered in the network by the monitoring system, it is sent to database 404. Server 108 determines that the TLA is associated with a new Node B and sets up the new Node B and a new Iub interface for monitoring. The new Node B and Iub interface may be displayed to users along with the RNC on a workstation GUI.

The monitoring system can identify channels in the UTRAN by monitoring the VPI and VCI parameters in NBAP, RNSAP and ALCAP messages. Whenever a message is captured, the VPI/VCI combination is compared to known VPI/VCI combinations to identify new channels. When new channels are detected, monitoring server 108 is updated with the new VPI/VCI channel information. The channels can be detected in real-time.

For AAL5 channels on Iur links, the channels are correlated to the correct fur interface using the pointcode of the RNC. In RNSAP messages, the pointcodes for the RNCs are present in the MTP3 layer. For AAL5 channels on lub links, no such information is present to correlate the AAL5 channels to the correct Iub links. Instead, the present invention uses a different framework to confirm when new Iub channels have been created. Whenever the same combination of VPI/VCI is seen on a particular lub link a particular number of times, then the channel is identified as a confirmed new channel and is attached to that Iub interface. The number of times a VPI/VCI match needs to be observed for a new channel is configurable at runtime.

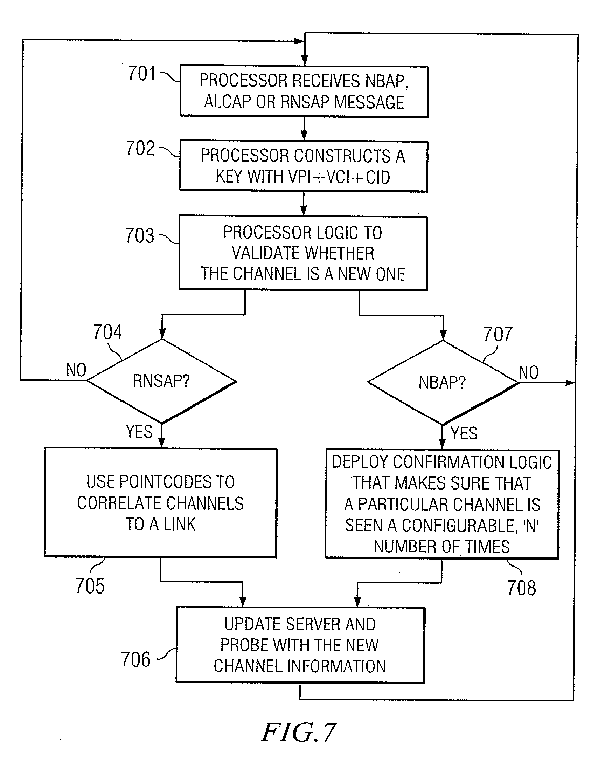

Figure 7 is a flowchart illustrating a method for evaluating VPI/VCI combinations to identify new channels. A monitoring processor receives NBAP, ALCAP or RNSAP messages in 701. The VPI and VCI parameters are extracted from the message in 702, and the processor constructs a VPI/VCI key. In 703, the processor compares the VPI/VCI key to known VPI/VCI combinations to validate whether a channel is new. In 704, if the message is an RNSAP message and the channel is not new, the flow returns to 701 and waits to evaluate the next message. If the VPI/VCI in an RNSAP message is for a new channel, then the flow moves from 704 to 705. The pointcodes in the RNSAP message are correlated to an Iur interface in 705. In 706, the monitoring system server and monitors are updated with new channel information. For NBAP messages, in 707, if the message is not new, then the flow returns to 701. If the VPT/VCI combination in the NBAP message is new, then confirmation logic is initiated in 708. The processor counts the number of times that the same VPI/VCI key is observed on a particular interface. When that VPI/VCI combination have been observed "n" times, then the processor identifies it as a valid new channel. In 706, the server and monitors are updated with the new channel information, and the process begins again at 701 with the next message.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method for detecting components of a Universal Mobile Telecommunications System (UMTS) network, comprising:
capturing an ATM message from the network;
extracting a network node identifier from the captured message;
comparing the network node identifier to a database of known network nodes; and
if the network node identifier is not associated with a known network node, then adding an entry for a new network node to the database, wherein the new network node entry includes the network node identifier.

2. The method of claim 1, further comprising:
identifying a recipient node for the captured message, wherein the recipient node is a known network node; and
adding a new network interface entry to the database, wherein the new network interface entry corresponds to a new network interface connecting the recipient node at a first endpoint and the new network node at a second endpoint.

3. The method of claim 1, further comprising:
displaying the new network node to a user on a display.

4. The method of claim 2, further comprising:
displaying the new network node, the recipient node, and the new network interface to a user on a display.

5. The method of claim 1, wherein the new network node is a Radio Network Controller (RNC) in a UTRAN network; and wherein the network node identifier is an RNC identifier.

6. The method of claim 2, wherein the recipient node and the new network node are Radio Network Controllers (RNCs); and wherein the new network interface is an lur interface in a UTRAN network.

7. The method of claim 1, wherein the new network node is a Node B in a UTRAN network, and the network node identifier is a Node B identifier.

8. The method of claim 2, wherein the recipient node is a Radio Network Controller (RNC), the new network node is a Node B, and the new network interface is an Iub interface in a UTRAN network.

9. The method of claim 1, wherein the captured message is a radio link setup message.

10. The method of claim 1, wherein the network node identifier is a transport layer address parameter.

11. A method for identifying channels in a Universal Mobile Telecommunications System (UMTS) network, comprising:
capturing an ATM message from the network;
extracting channel identifiers from the captured message;
creating a channel key from the channel identifiers;
comparing the channel key to a database of known channels; and
if the channel key is not associated with a known channel, then adding an entry for a new channel to the database.

12. The method of claim 11, wherein the channel identifiers are selected from the group consisting of:
a Virtual Path Identifier (VPI);
a Virtual Channel Identifier (VCI); and
an ATM Port.

13. The method of claim 11, further comprising:
associating the new channel to an interface.

14. The method of claim 13, further comprising: identifying the interface using a pointcode in the captured message.

15. The method of claim 14, wherein the interface is an lur interface in a UTRAN network, the captured message is a Radio Network Subsystem Application Part (RNSAP) message, and the pointcode is associated with a Radio Network Controller (RNC).

16. The method of claim 13, further comprising:
identifying the interface by determining if messages having the channel key are captured from a known interface a predetermined number of times.

17. The method of claim 16, wherein the interface is an lub interface in a UTRAN network, and the captured message is a Node B Application Part (NBAP) or Access Link Control Application Part (ALCAP) message.
